# EUROPÄISCHE PATENTSCHRIFT

(11) **EP 2 584 906 B1**
(45) Veröffentlichungstag und Bekanntmachung des Hinweises auf die Patenterteilung: **04.10.2017**
(21) Anmeldenummer: 11748885.8
(22) Anmeldetag: 21.06.2011
(51) Int. Cl.: A23C 3/037, A47J 31/44

(54) **VORRICHTUNG ZUM BEHANDELN EINER FLÜSSIGKEIT, VORZUGSWEISE MILCH, MIT EINEM DAMPFFÜHRENDEN TAUCHROHR**
DEVICE FOR TREATING A LIQUID, PREFERABLY MILK, COMPRISING A STEAM-CONDUCTING IMMERSION TUBE
DISPOSITIF DE TRAITEMENT D'UN LIQUIDE, DE PRÉFÉRENCE DE LAIT, À L'AIDE D'UN TUBE PLONGEUR POUR L'ACHEMINEMENT DE VAPEUR

(30) Priorität: 24.06.2010 CH 10302010
(43) Veröffentlichungstag der Anmeldung: 01.05.2013
(73) Patentinhaber: Eversys Holding SA, 1957 Ardon (CH)
(72) Erfinder: IN-ALBON, Jean-Paul, CH-1957 Ardon (CH)
(74) Vertreter: Charrier Rapp & Liebau
(86) Internationale Anmeldenummer: PCT/EP2011/003065
(87) Internationale Veröffentlichungsnummer: WO 2011/160818

(56) Entgegenhaltungen:
- EP-A1- 1 815 774
- EP-A2- 2 025 270
- WO-A1-91/03951
- WO-A1-2010/121299
- US-A1- 2003 131 735
- US-A1- 2006 272 516

## Beschreibung

Die Erfindung betrifft eine Vorrichtung zum Behandeln einer Flüssigkeit, vorzugsweise Milch, mit einem dampfführenden Tauchrohr, das mit einem Temperaturfühler für die zu behandelnde Flüssigkeit versehen ist.

Vorrichtungen dieser Art werden beispielsweise zum Erhitzen oder Aufschäumen von Milch bei der Zubereitung von milchhaltigen Getränken eingesetzt. Eine solche Vorrichtung ist in der US-PS 6, 786, 138 B2 geoffenbart. Die bekannte Vorrichtung hat als Temperaturfühler einen im Innenraum des Tauchrohres angeordneten Fühlstab, der im Betrieb direkt vom durchströmenden Dampf umgeben ist. Das hat zur Folge, dass die erfassten Temperaturmesswerte der behandelten Milch vielfach ungenau sind. Ausserdem ist der dünne Fühlstab mechanisch instabil, so dass die Gefahr besteht, dass er etwa beim täglichen Reinigen der Vorrichtung infolge mechanischer Beanspruchung beschädigt oder gar zerstört wird.

Die EP 2 025 270 A2 zeigt eine Vorrichtung zum Aufschäumen und Erhitzen von Milch, umfassend einen Dampferzeuger und ein über eine Dampfleitung damit verbundenes Dampfrohr. Die Dampfleitung ist mit einer verschließbaren Luftzufuhröffnung versehen und das Dampfrohr weist einen Temperatursensor zum Messen der Milchtemperatur auf, der im Bereich des vorderen Endes des Dampfrohrs angeordnet ist und das Dampfrohr in axialer Richtung nach vorne überragt.

Weitere Vorrichtungen zur Erhitzung bzw. zur Aufschäumung von Milch mit einem Tauchrohr und einem daran angeordneten Temperatursensor zur Erfassung der Temperatur der Milch, in welche das Tauchrohr eingeführt wird, sind aus der WO 91/03951 A1, der EP 1 815 774 A1 und der US 2006/272516 A1 bekannt.

Der Erfindung liegt die Aufgabe zugrunde, diese Nachteile zu vermeiden und eine Vorrichtung der eingangs genannten Art zu schaffen, die sich durch eine genaue Erfassung der Flüssigkeitstemperatur auszeichnet und im Betrieb schadlos der mechanischen Beanspruchung standhält.

Diese Aufgabe wird erfindungsgemäss dadurch gelöst, dass der Temperaturfühler in oder auf der Aussenwand des Tauchrohres angebracht ist. Auf diese Weise befindet sich der Temperaturfühler nicht im direkten Kontakt mit dem Dampfstrom, so dass dieser nicht negativ die Funktion des Temperaturfühlers beeinflusst. Andererseits ist letzterer durch die vorgeschlagene Anordnung stabil. Und er kann in der jeweils optimalen Einbaulage eingebaut werden.

Die Erfindung sieht auch vor, zum Schutz des Temperaturfühlers ihn in einem Trägerelement mit Kontakt zur Aussenwand des Tauchrohres einzubauen. Dabei ist es im Sinne einer kompakten Bauweise von Vorteil, wenn das Trägerelement erfindungsgemäss in einer Ausnehmung der Aussenwand vorzugsweise bündig mit der Aussenfläche des Tauchrohres eingebaut ist.

Die Erfindung sieht ferner vor, dass das Tauchrohr ein sich bis zum Dampfaustritts kopf erstreckendes Dampfrohr aufweist, das im Innenraum des Tauchrohres vorzugsweise koaxial zu ihm eingebaut ist. Dadurch, dass der Dampf durch den Dampfzuführungskanal des Dampfrohres ganz ohne Kontakt mit der Aussenwand des Tauchrohres hindurchströmt, ist der Temperaturfühler nicht dem thermischen Effekt des Dampfstromes ausgesetzt.

Die koaxiale Anordnung des Dampfrohres hat den Vorteil, dass dadurch der thermisch isolierende Zwischenraum zwischen ihm und der Aussenwand des Tauchrohres gleichmässig ist. In diesem Zwischenraum kann auch eine zusätzliche thermische Isolierung, etwa in Gestalt einer isolierenden Beschichtung des Dampfrohres angebracht sein.

In manchen Fällen ist es für eine genaue Erfassung der Flüssigkeitstemperatur von Vorteil, den Temperaturfühler im Dampfaustrittskopf des Tauchrohres einzubauen, da er in der Regel im Betrieb am tiefsten in der Flüssigkeit eingetaucht ist.

Die Erfindung wird nachfolgend anhand eines Ausführungsbeispiels unter Bezugnahme auf die Zeichnung näher erläutert.

Es zeigen:
Fig. 1: die erfindungsgemässe Vorrichtung, in der Vorderansicht dargestellt,
Fig. 2: die Vorrichtung aus Fig. 1, in einem Längsschnitt entlang der Linie A-A in Fig. 1 dargestellt, und
Fig. 3: die Vorrichtung aus Fig. 1, in einem Querschnitt entlang der Linie B-B in Fig. 1 dargestellt.

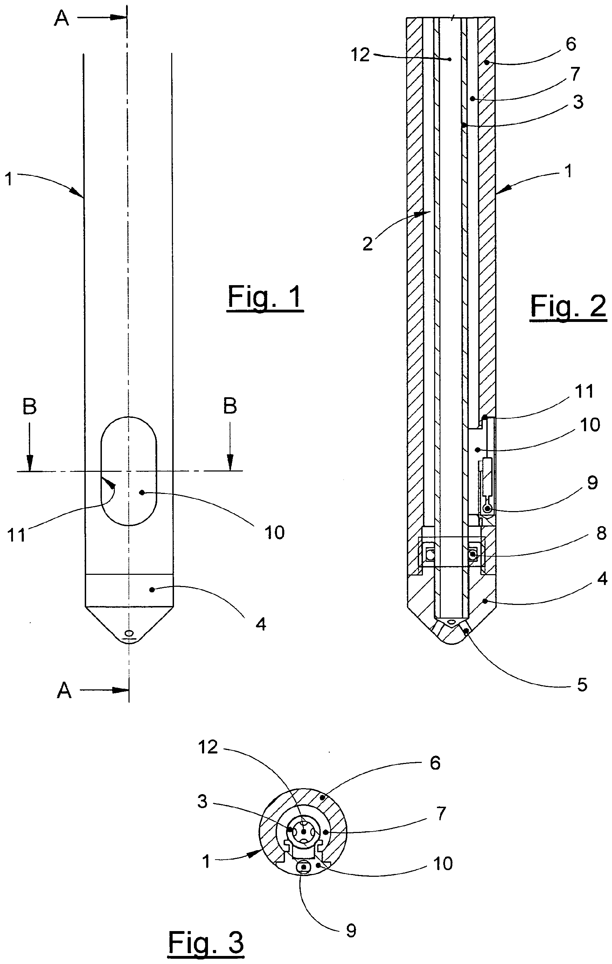

Die in Fig.1 bis Fig.3 dargestellte Vorrichtung dient zum Erhitzen oder Aufschäumen von Milch mit Dampf, welcher der Milch mit einem Tauchrohr 1 zugeführt wird. Dieser weist ein in seinem Innenraum 2 angeordnetes Dampfrohr 3 auf, das in einen Dampfaustrittskopf 4 mit Dampfaustrittsdüsen 5 hineinragt. Der Dampfaustrittskopf 4 ist als separater Bauteil ausgebildet und kann bei Bedarf abgebaut werden.

Das Dampfrohr 3 ist koaxial zum Tauchrohr 1 angeordnet, wobei zwischen ihm und der Aussenwand 6 des Tauchrohres ein gleichmässiger Zwischenraum 7 vorhanden ist. Zum Zentrieren des Dampfrohres 3 ist ein O-Ring 8 zwischen dem Tauchrohr 1 und dem Dampfaustrittskopf 4 eingesetzt.

In der Aussenwand 6 des Tauchrohres 1 ist ein Temperaturfühler 9 angeordnet, mit dem die Temperatur der zu behandelnden Mich erfasst wird. Der Temperaturfühler 9 ist in einem Trägerelement 10 integriert, das in einer Aussparung 11 der Aussenwand 6 eingesteckt ist. Das Trägerelement 10 steht in direktem Kontakt mit der Aussenwand 6, bündig mit der Aussenfläche des Tauchrohres.

Im Betrieb wird durch das Dampfrohr 3 und die Dampfaustrittsdüsen 5 Dampf in die zu behandelnde Milch eingespritzt. Da die Dampfzuführung u.a. in Abhängigkeit von der Temperatur des Produkts gesteuert wird, ist eine genaue Erfassung des Temperaturverlaufs überaus wichtig für die Qualität des zubereiteten Produktes.

Die beschriebene Anordnung zeichnet sich dadurch aus, dass sie genau die tatsächliche Milchtemperatur erfassen kann, weil ihr Temperaturfühler 9 vom Dampfrohr 6 räumlich durch den Zwischenraum 7 getrennt ist, so dass der durch den Dampfzuführungskanal 12 strömende Dampf nicht negativ die Funktion des Temperaturfühlers beeinflusst.

Die erfindungsgemässe Ausführung des Tauchrohres ermöglicht den Einsatz kleinbauender Sensoren, die Platz sparend im Trägerelement 10 gut geschützt sind.

Dieses Ausführungsbeispiel erleichtert auch die Montage, weil es bei ihr möglich ist, den Temperaturfühler 9 in das Trägerelement 10 zu installieren. Die Lage dieser Ausnehmung kann in Abhängigkeit von den jeweiligen Einsatzbedingungen gewählt werden. Es ist insbesondere in einzelnen Fällen vorteilhaft, den Temperaturfühler zu installieren. Die Lage dieser Ausnehmung kann in Abhängigkeit von der jeweiligen Einsatzbedingung gewählt werden. Es ist insbesondere in einzelnen Fällen vorteilhaft, den Temperaturfühler 9 im Dampfaustrittskopf 4 einzubauen, zumal letzterer in der Regel ein vom Tauchrohr lösbarer Bauteil ist, in dem der Temperaturfühler separat einbaubar ist. Eine solche Anordnung des Temperaturfühlers kann auch ohne weiteres bei Tauchrohren mit integriertem Dampfaustrittskopf angewandt werden. Sie ermöglicht in jedem Fall den Austausch des Temperaturfühlers mit geringfügigem Aufwand.

Bei der erläuterten Ausführung ist der Temperaturfühler in der Aussenwand des Tauchrohres angeordnet. Er kann aber auch im Rahmen der Erfindung direkt auf der Aussenwand des Tauchrohres angebracht sein, so dass in diesem Fall das Trägerelement 10 etwas aus der Aussenfläche des Tauchrohres herausragt.

## Patentansprüche

1. Vorrichtung zum Behandeln einer Flüssigkeit, vorzugsweise Milch, mit einem dampfführenden Tauchrohr (1), das mit einem Temperaturfühler (9) für die zu behandelnde Flüssigkeit versehen ist, welcher durch einen Zwischenraum (7) räumlich von einem im Innenraum (2) des Tauchrohres (1) eingebauten Dampfrohr (3) getrennt ist, **dadurch gekennzeichnet, dass**
der Temperaturfühler (9) in der Aussenwand (6) des Tauchrohres (1) angebracht ist oder mit Kontakt zur Aussenwand (6) des Tauchrohres (1) in einem in einer Ausnehmung (11) der Aussenwand (6) angeordneten Trägerelement (10) eingebaut ist.

2. Vorrichtung nach Anspruch 1,
**dadurch gekennzeichnet, dass**
das Trägerelement (10) in der Ausnehmung (11) der Aussenwand (6) vorzugsweise bündig mit der Aussenfläche des Tauchrohres eingebaut ist.

3. Vorrichtung nach Anspruch 1 oder 2, wobei das Tauchrohr (1) mit einem Dampfaustrittskopf (4) versehen ist,
**dadurch gekennzeichnet, dass**
das Tauchrohr (1) einen sich bis zum Dampfaustrittskopf (4) erstreckenden Dampfrohr (3) aufweist, das im Innenraum (2) des Tauchrohres (1) vorzugsweise koaxial zu ihm eingebaut ist.

4. Vorrichtung nach Anspruch 3,
**dadurch.gekennzeichnet, dass**
in dem Zwischenraum (7) zwischen dem Dampfrohr (3) und der Aussenwand (6) des Tauchohres eine zusätzliche wärmeisolierung angebracht ist.

5. Vorrichtung nach Anspruch 3 oder 4,
**dadurch gekennzeichnet, dass**
der Temperaturfühler (9) im Dampfaustrittskopf (4) des Tauchrohres eingebaut ist.

## Claims

1. Device for treating a liquid, preferably milk, with a steam-conducting immersion tube (1) which is provided with a temperature sensor (9) for the liquid to be treated, which is spatially separated by a gap (7) from a steam tube (3) installed in the interior (2) of the immersion tube (1), **characterised in that** the temperature sensor (9) is mounted in the outer wall (6) of the immersion tube(1) or, in contact with the outer wall (6) of the immersion tube (1), installed in a carrier element (10) arranged in a recess (11) in the outer wall (6).

2. Device according to claim 1, **characterised in that** the carrier element (10) is installed in the recess (11) in the outer wall (6), preferably flush with the outer surface of the immersion tube.

3. Device according to claim 1 or 2, wherein the immersion tube (1) is provided with a steam outlet head (4), **characterised in that** the immersion tube (1) has a steam tube (3) which extends as far as the steam outlet head (4) and which is installed in the interior (2) of the immersion tube (1), preferably coaxially with it.

4. Device according to claim 3, **characterised in that** in the gap (7) between the steam tube (3) and the outer wall (6) of the immersion tube is mounted an additional thermal insulation.

5. Device according to claim 3 or 4, **characterised in that** the temperature sensor (9) is installed in the steam outlet head (4) of the immersion tube.

## Revendications

1. Dispositif servant à traiter un liquide, de préférence du lait, avec un tube plongeur (1) acheminant de la vapeur, lequel est pourvu d'une sonde de température (9) pour le liquide à traiter et qui est séparé spatialement d'un tube de vapeur (3) installé dans l'espace intérieur (2) du tube plongeur (1) par un espace intermédiaire (7), **caractérisé en ce que**
la sonde de température (9) est mise en place dans la paroi extérieure (6) du tube plongeur (1) ou est installée, avec un contact avec la paroi extérieure (6) du tube plongeur (1), dans un élément de support (10) disposé dans un évidement (11) de la paroi extérieure (6).

2. Dispositif selon la revendication 1,
**caractérisé en ce que**
l'élément de support (10) est installé dans l'évidement (11) de la paroi extérieure (6) de préférence en affleurement avec la surface extérieure du tube plongeur.

3. Dispositif selon la revendication 1 ou 2, dans lequel le tube plongeur (1) est pourvu d'une tête de sortie de vapeur (4),
**caractérisé en ce que**
le tube plongeur (1) présente un tube de vapeur (3) s'étendant jusqu'à la tête de sortie de vapeur (4), lequel est installé dans l'espace intérieur (2) du tube plongeur (1) de préférence de manière coaxiale par rapport à ce dernier.

4. Dispositif selon la revendication 3,
**caractérisé en ce que**
une isolation thermique supplémentaire est mise en place dans l'espace intermédiaire (7) entre le tube de vapeur (3) et la paroi extérieure (6) du tube plongeur.

5. Dispositif selon la revendication 3 ou 4,
**caractérisé en ce que**
la sonde de température (9) est installée dans la tête de sortie de vapeur (4) du tube plongeur.
